# FASCICULE DE BREVET EUROPEEN

(11) **EP 3 278 301 B1**
(45) Date de publication et mention de la délivrance du brevet: **11.08.2021**
(21) Numéro de dépôt: 16716504.2
(22) Date de dépôt: 30.03.2016
(51) Int. Cl.: G06T 7/73, G06T 7/80

(54) **PROCEDE DE DETERMINATION D'UNE DIRECTION D'UN OBJET A PARTIR D'UNE IMAGE DE L'OBJET**
VERFAHREN ZUR BESTIMMUNG DER RICHTUNG EINES OBJEKTS AUF DER GRUNDLAGE EINES BILD DES OBJEKTS
METHOD OF DETERMINING A DIRECTION OF AN OBJECT ON THE BASIS OF AN IMAGE OF THE OBJECT

(30) Priorité: 30.03.2015 FR 1500636
(43) Date de publication de la demande: 07.02.2018
(73) Titulaire: Thales, 92400 Courbevoie (FR)
(72) Inventeur: SIMON, Alain, 78490 Les Mesnuls (FR)
(74) Mandataire: Marks & Clerk France
(86) Numéro de dépôt international: PCT/EP2016/056852
(87) Numéro de publication internationale: WO 2016/156352

(56) Documents cités:
- US-B2- 8 600 700
- Mani Golparvar-Fard ET AL: "AR - A 4-DIMENSIONAL AUGMENTED REALITY MODEL FOR AUTOMATING CONSTRUCTION PROGRESS MONITORING DATA COLLECTION, PROCESSING AND COMMUNICATION", Journal of Information Technology in Construction (ITcon), juin 2009 (2009-06), pages 129-153, XP055254105, Extrait de l'Internet: URL:http://www.itcon.org/data/works/att/20 09_13.content.06965.pdf [extrait le 2016-03-01]
- EDOARDO ARDIZZONE ET AL: "Visual Saliency by Keypoints Distribution Analysis", 14 septembre 2011 (2011-09-14), IMAGE ANALYSIS AND PROCESSING - ICIAP 2011, SPRINGER BERLIN HEIDELBERG, BERLIN, HEIDELBERG, PAGE(S) 691 - 699, XP019164538, ISBN: 978-3-642-24084-3 page 692 Section <<2.2 SIFT Density Maps>>; page 693

## Description

Le domaine de l'invention est celui de la détermination de la direction absolue (ou azimut et élévation géographiques) d'un objet à partir d'une position géographique depuis laquelle est acquise une image optronique de celui-ci.

La détermination de directions géographiques absolues au moyen d'un dispositif d'imagerie optronique qui ne dispose pas de dispositif d'orientation permettant une mesure de direction de qualité compatible de celle recherchée constitue un défi technologique.

En effet, les systèmes qui s'attachent à résoudre ce problème utilisent en général des composants de mesure d'orientation dont le coût reste élevé pour atteindre la performance recherchée qui peut être de la classe du milli-radian. Par exemple, une performance angulaire de la classe 1 milli-radian à 90% est nécessaire pour contenir une erreur de localisation dans la catégorie TLE1 (6m à 90%) sur un objet situé à 5km du senseur. Les dispositifs de mesure d'orientation de cette classe sont peu communs, chers et de masse trop importante pour être considérés dans un dispositif portable. Les solutions suivantes qui permettent la mesure d'attitude ne sont bien pas adaptées pour les raisons suivantes :
- Les compas magnétiques sont peu performants (classe 10 milli-radians), difficiles à intégrer, très sensibles à l'environnement EM, utilisent la déclinaison magnétique locale (elle aussi mal connue dans la classe 10 milli-radians) pour transformer l'azimut magnétique en azimut ou direction géographique, leur coût est relativement faible mais peut atteindre 1000€.
- Les FOG (acronyme de l'expression anglo-saxonne Fiber Optic Gyrometer), gyromètres laser (RLG), gyromètres à résonateur hémisphérique (HRG), sont volumineux, lourds, de consommation électriques et de coût élevés,
- Les MEMS ne sont pas suffisamment performants (quelques milli-radian), présentent une faible maturité et nécessitent une procédure de calibration pouvant être longue et complexe,
- Les objets célestes permettent une performance élevée mais ne sont pas toujours visibles (difficulté pour voir les étoiles de jour, ou le soleil à travers de gros nuages),
- Les systèmes de positionnement tels que GNSS (acronyme de l'expression anglo-saxonne Global Navigation Satellite System), sont modérément performants pour les bases de longueur envisagées, et leur volume, leur masse et leur consommation sont peu compatibles d'un dispositif portable,
- L'emploi d'amers souvent extraits de données type ortho-image (en visée équivalente à une vue verticale) ou carte, n'est pas facile à mettre en œ uvre lorsqu'on utilise une image d'opportunité (surtout lorsqu'elle est en petit champ et en visée rasante) puisque :
   ∘ cette approche nécessite tout d'abord de disposer de la vue verticale avec le bon niveau de détail,
   ∘ la probabilité de pouvoir mettre en correspondance un point d'amer à un détail présent dans l'image se réduit quadratiquement avec le champ de celle-ci.
   ∘ la probabilité de pouvoir associer plusieurs amers dans une image décroit de plus linéairement avec leur nombre.
- La technique basée sur la polarisation du ciel, technique récente bio-inspirée de l'orientation d'insectes pour leur navigation, présente de faibles performances.

Le document « D⁴AR - A 4-dimensional augmented reality model for automating construction progress monitoring data collection, processing and communication » (Mani Golparvar-Fard et al.) décrit un procédé permettant d'évaluer l'avancée d'un chantier, à partir de prise d'images ayant des positions et des orientations spécifiques. Dans ce document, les images sont acquises depuis des positions distantes comme illustré notamment fig 9 avec la distance O_{L}O_{R} entre les caméras car la position de l'objet P est déterminé par triangulation.

Le document US 8 600 700 concerne la mesure d'angles d'un objet dans des images à 360° obtenues à partir d'un dispositif d'imagerie équipé de moyens de positionnement et placé dans au moins deux positions différentes.

Dans le document « Modeling the world from internet photo collections », les images d'un même site acquises sous différents angles sont également exploitées pour modéliser le site en 3D.

Le but de l'invention est de pallier ces inconvénients.

À titre d'exemple, le procédé propose un mode performant d'estimation d'orientations d'images et de directions d'objets de la classe 1 mrad, sur un système optronique d'acquisition d'images portable en exploitant :
- une phase de baptême terrain (PBT) aussi désignée phase d'apprentissage qui consiste à apprendre et archiver l'information sur l'environnement de la scène imagée, sous formes de signatures caractérisant des détails extraits des images, dans la ou les bandes de fréquence du système optronique, ces signatures étant en outre associées à leur direction dans un référentiel géographique,
- une phase d'opération en ligne (POL), qui consiste à exploiter les informations archivées dans la phase d'apprentissage pour déterminer en temps réel (typiquement en moins de 3 secondes) la direction géographique et éventuellement la localisation d'objets au sein d'une image nouvellement acquise dont les signatures sont extraites pour être comparées aux signatures archivées.

Dans la suite :
- on désigne par direction (géographique) d'un objet d'une scène, le vecteur joignant le système à l'objet ; cette direction est caractérisée d'après son élévation (angle par rapport au plan perpendiculaire à la verticale locale) et son azimut géographique (angle entre le Nord géographique et la projection de la direction à l'objet dans le plan horizontal) ;
- on qualifie par orientation ou attitude d'une image, les informations permettant d'orienter totalement l'image dans un repère couvrant les 3 dimensions de l'espace géographique (par exemple de manière minimale avec les 3 angles d'Euler roulis, tangage et lacet).

Par ailleurs la détermination d'une direction correspondant à un pixel d'une image dépend de ses coordonnées image et se fait à l'aide d'un modèle géométrique paramétrique du système optronique. Les paramètres du modèle dépendent de la position du système et de l'orientation de l'image ainsi que de paramètres internes (comme la focale ou distorsion du senseur optronique).

Plus précisément l'invention a pour objet un procédé de détermination de la direction géographique absolue d'un objet d'une scène, tel que défini dans la revendication 1.

Ce procédé, que l'on pourrait qualifier de compas odométrique, met ainsi en œuvre une phase préliminaire d'apprentissage (typiquement de moins de 3 mn) en caractérisant l'environnement du dispositif d'imagerie puis une phase d'exploitation temps réel qui utilise les informations apprises pour déterminer les directions absolues d'images et en déduire celles des objets présents dans les images.

L'apprentissage procède d'une phase dite "baptême terrain" qui consiste à acquérir des images en recouvrement sur tout ou partie du tour d'horizon et à apprendre l'environnement en extrayant et construisant une information compressée qui caractérise son contenu dans les bandes de fréquence du dispositif d'imagerie.

L'exploitation d'une image courante permet ensuite de déterminer des directions géographiques instantanées d'objets présents dans ces images.

Il est mis en œuvre en respectant les conditions d'utilisation suivantes :
- sur un système optronique portable, en se laissant éventuellement la possibilité d'utiliser un support physique léger de type trépied,
- dans un environnement ne disposant pas nécessairement de réception de signaux GNSS ou, de manière équivalente, sur un système n'embarquant pas nécessairement de récepteur GNSS (de type GPS, Glonass, Galileo par exemple),
- sans moyens d'orientation ou avec des moyens de faible coût (<100€), faible masse (<100g), faible qualité (classe 10 mrad), donc sans gyromètre, sans instruments inertiels de qualité (UMI, CNI), sans goniomètre...,
- éventuellement sans déplacer le système optronique longitudinalement ou verticalement,
- sans connaissance particulière sur l'objet à localiser, en particulier de type coordonnées géographiques ou dimensions,
- sans que le système puisse échanger de l'information avec l'objet (en particulier de type collaboration),
- sans connaissances dans la zone de scène correspondant à l'image acquise de l'objet, en particulier de type amers, dimensions, ....

La performance souhaitée se situe typiquement :
- en azimut dans le domaine allant de 0.5 à 2 mrad pour la PBT et la POL,
- en élévation,
   ∘ avec inclinomètre accessible en POL, meilleure que 20 mrad en PBT et autour de 1 mrad en POL,
   ∘ sans inclinomètre accessible en POL, de 1 à 2 mrad en PBT et en POL.

Ainsi dès lors que l'on dispose d'un équipement de mesure d'élévation relativement léger de type inclinométre, la difficulté consiste essentiellement à restituer en temps réel une direction de la classe du mrad en azimut sachant que les systèmes SWaP traditionnel à base de compas sont plutôt de la classe 10 mrad.

La focale du premier dispositif d'imagerie peut être différente de la focale du second dispositif d'imagerie.

Selon une caractéristique de l'invention, une position précise du premier dispositif d'imagerie et/ou les paramètres internes dont la focale du premier dispositif d'imagerie sont estimés lors de l'étape de recalage fin et/ou les paramètres internes, dont la focale du second dispositif d'imagerie de la phase en ligne, sont estimés lors de l'étape d'estimation de l'attitude de l'image courante.

De préférence, les premier et second dispositifs d'imagerie sont un même dispositif d'imagerie.

Selon une caractéristique de l'invention, les descripteurs de la phase de « baptême terrain » sont archivés dans une base de données avec leurs caractéristiques radiométriques et leurs directions absolues.

Une carte de distribution spatiale des descripteurs peut être construite avant la phase d'opération en ligne.

La série d'images acquises lors de la phase de « baptême terrain » couvre avantageusement un tour complet d'horizon.

La série d'images acquises lors de la phase de « baptême terrain » peut couvrir une portion de tour complet d'horizon ; au moins deux références (directions géographiques absolues de référence) sont alors identifiées dans les images.

La position du premier dispositif d'imagerie est déterminée par des moyens de positionnement équipant ledit dispositif ou est estimée à partir de plusieurs références. De même pour la position du second dispositif d'imagerie.

Le procédé peut comporter une étape de construction d'une image panoramique à partir des images finement recalées, chaque pixel de l'image panoramique étant associé à une direction absolue.

Les images acquises sont par exemple des images video.

Chaque référence est typiquement un amer terrestre ou un objet céleste.

D'autres caractéristiques et avantages de l'invention apparaîtront à la lecture de la description détaillée qui suit, faite à titre d'exemple non limitatif et en référence aux dessins annexés dans lesquels :
la figure 1 représente un organigramme des principales étapes du procédé selon l'invention,
la figure 2 représente schématiquement un exemple de panorama à balayer pendant la phase de baptême terrain,
la figure 3a représente schématiquement un exemple d'images acquises par balayage du panorama de la figure 2, et la figure 3b, ces images sur lesquelles sont indiquées des références de direction connue,
la figure 4 illustre l'acquisition d'images suivant 3 élévations moyennes et formant 3 bandeaux, avec en abscisse le gisement et en ordonnée l'élévation,
les figures 5 schématisent en vue de dessus, différentes manières d'acquérir l'information image sur un tour d'horizon, sous forme d'une séquence vidéo continue avec un fort recouvrement entre les images (fig 5a), par acquisition image par image avec recouvrement adapté et contrôlé lors de l'acquisition (fig 5b) et selon un mode mixte agglomérant une séquence continue acquise en premier lieu, avec dans un second temps quelques images éparses acquises une à une sur le tour d'horizon sans nécessiter de recouvrement entres elles mais avec celles acquises en premier lieu (fig 5c),
la figure 6 illustre un exemple d'emprise dans la scène et de recouvrement d'images acquises par un balayage circulaire dans les directions azimut selon λ et les directions élévation selon ϕ, sans couverture d'un tour complet d'horizon,
la figure 7 illustre une manière de compléter la couverture spatiale et les informations élaborées en PBT lors d'une POL,
la figure 8 représente schématiquement un exemple d'acquisition à partir d'un aéronef.

D'une figure à l'autre, les mêmes éléments sont repérés par les mêmes références.

L'invention est basée sur un apprentissage de contenu de scène par traitement d'images et sur l'emploi de ces informations en vue de déterminer des directions d'objets présents dans une image de la scène avec une bonne exactitude absolue et de manière rapide. Une fois sa direction déterminée, l'objet peut éventuellement être localisé dans l'environnement.

Le procédé selon l'invention peut être mis en œuvre sur des caméras terrestres ne nécessitant pas de moyen de positionnement interne (récepteur GNSS), de dispositif de mesure d'attitude (UMI, compas magnétique, gyro) voire de moyens d'installation (trépied), ni de télémètre.

Un des problèmes techniques à résoudre qui sous-tend ces phases d'apprentissage puis de calcul de directions d'objets, est d'orienter les images acquises tout en respectant les conditions d'utilisation suivantes :
- sur un système optronique portable, en se laissant éventuellement la possibilité d'utiliser un support physique léger de type trépied,
- dans un environnement ne disposant pas nécessairement de réception de signaux GNSS ou, de manière équivalente, sur un système n'embarquant pas de récepteur GNSS (de type GPS, Glonass, Galileo par exemple),
- sans moyens d'orientation donc sans gyromètre, ou avec des moyens de faible coût (<100€), faible masse (<100g), faible qualité (classe 10 mrad), sans instruments inertiels de qualité (UMI, CNI), sans goniomètre...,
- éventuellement sans déplacer le système optronique longitudinalement ou verticalement,
- sans connaissance particulière sur l'objet à localiser, en particulier de type coordonnées géographiques ou dimensions,
- sans que le système puisse échanger de l'information avec l'objet,
- sans connaissances dans la zone de scène correspondant à l'image acquise de l'objet, en particulier de type amers, dimensions, ....

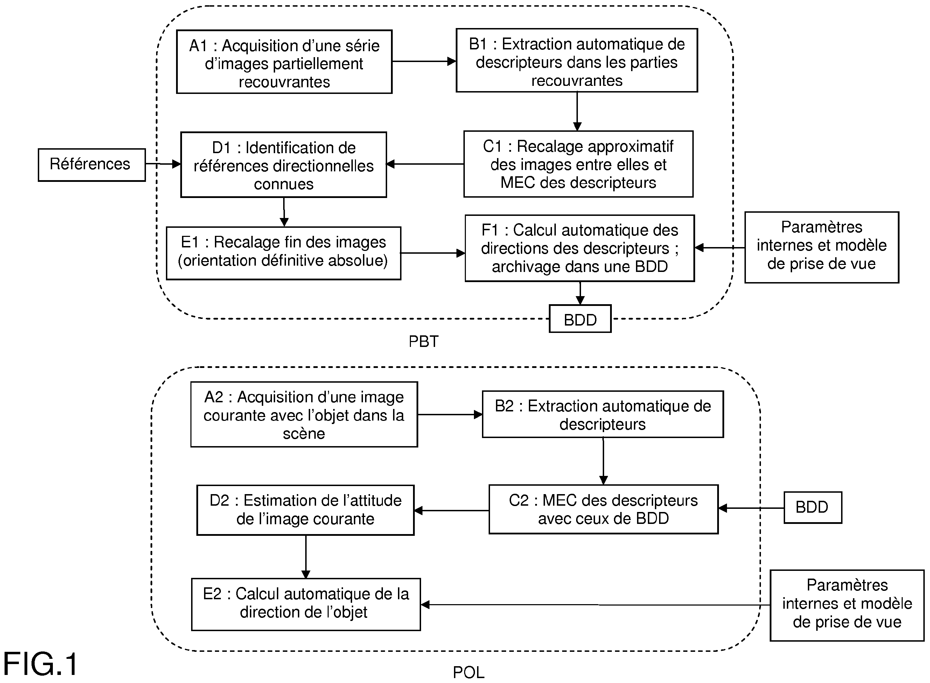

Le procédé de détermination de la direction d'un objet d'une scène depuis la position d'acquisition d'une image optronique, avec une performance souhaitée prédéterminée, est décrit en relation avec la figure 1. Il est mis en œuvre au moyen d'un système optronique équipé :
- d'un dispositif optronique d'acquisition d'images (ou dispositif d'imagerie) dans le domaine visible ou IR tel qu'une caméra ou des jumelles, de paramètres internes prédéterminés (focale et éventuellement champ de vision (FoV en anglais), point principal image, paramètres décrivant la distorsion optique radiale et tangentielle, pas des cellules photosensibles dans les deux directions image), de position connue et qui peut donc à cet effet être muni d'un dispositif de positionnement de type récepteur GNSS, (GPS, GLONASS, Galiéo, ...) ou tout autre moyen permettant de se positionner dans la précision voulue comme D*LORAN* (pour Differential LOng RAnge Navigation), cartographie et saisie manuelle, communication de la position par moyen déporté, etc, mais on verra par la suite que sans un tel dispositif, la position peut néanmoins être connue, et
- d'une unité de traitement des images acquises.

Le procédé comporte principalement deux phases : une phase d'apprentissage dite de « baptême terrain » et une phase d'opération en ligne.

La phase d'apprentissage comporte les étapes A1 à F1, telles que définies dans la revendication 1.

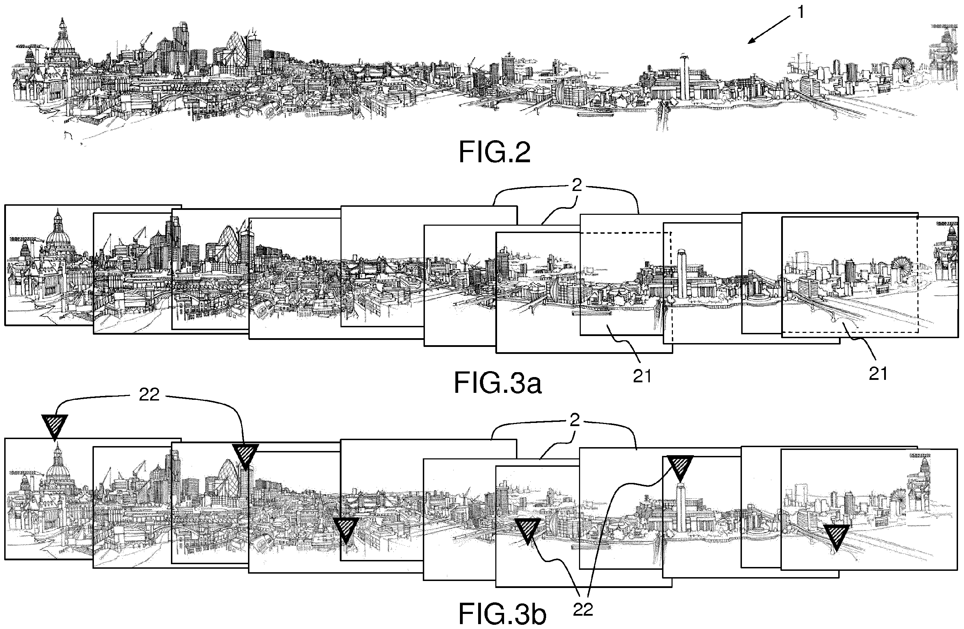

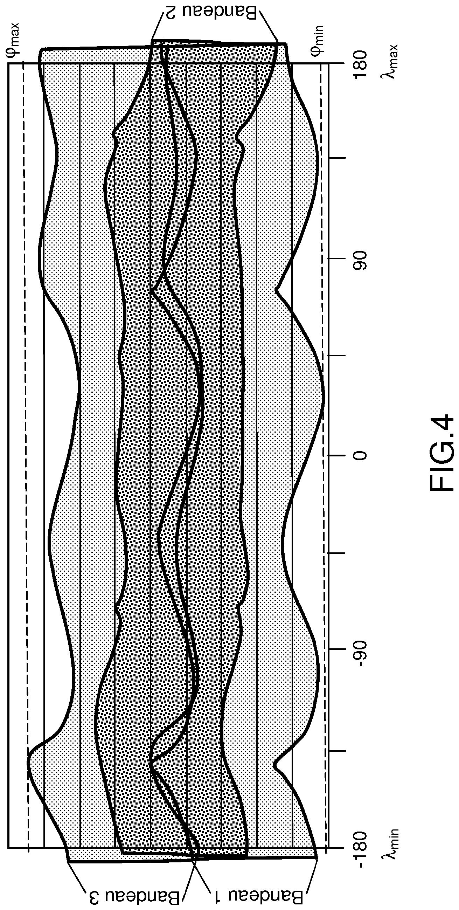

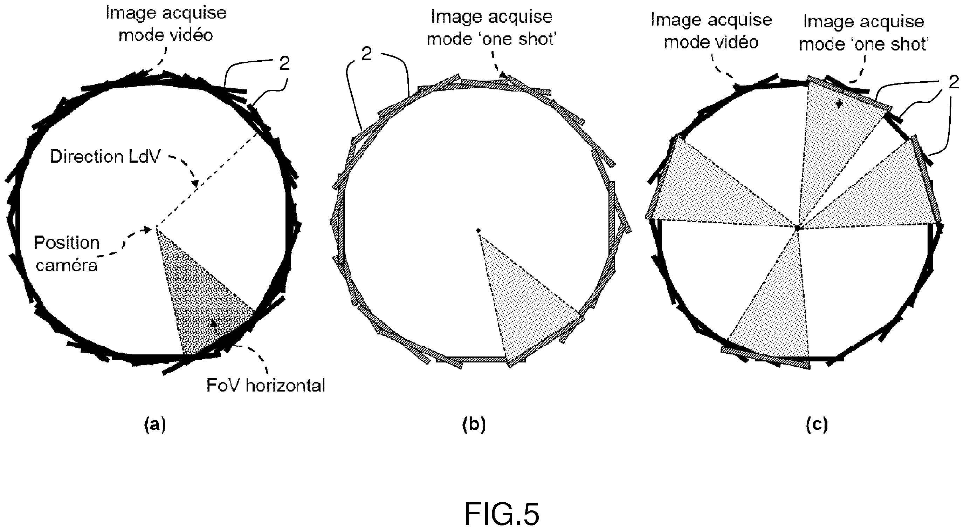

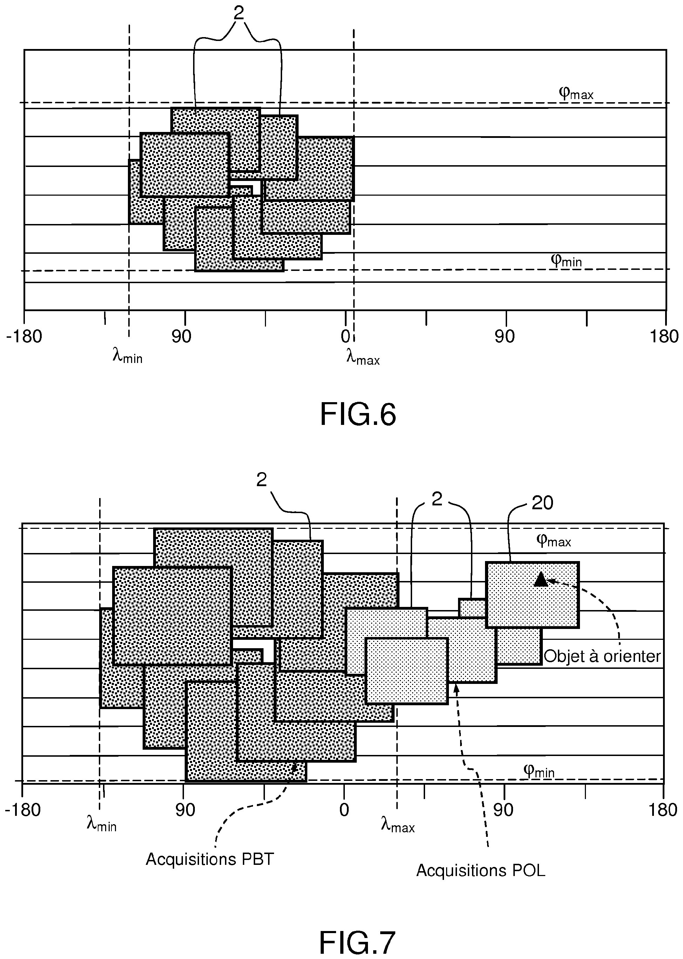

Sur la base des exemples on va détailler ces étapes. A1) acquisition automatique (à partir d'une plate-forme équipée d'un mécanisme « Pan and Tilt », mécanisme permettant de programmer l'orientation des acquisitions dans des directions spécifiques relativement à la plate-forme et qui permet d'orienter un système éventuellement automatiquement de manière programmable, ou à partir d'un aéronef), quasi-automatique (vidéo) ou image à image par un opérateur, par balayage de la scène 1 selon une figure fermée qui peut être circulaire, dont un exemple est montré figure 2, au moyen d'un premier dispositif d'imagerie optronique de position déterminée, d'une série d'images 2 optroniques partiellement recouvrantes montrées figure 3a, incluant une ou plusieurs images de la scène (généralement plus réduite que la scène 1) dans laquelle l'objet dont on déterminera la direction au cours de la phase suivante, se situera a priori. L'acquisition est réalisée dans une voie visible ou IR, avec un champ de vision spécifique du dispositif. Le recouvrement 21 d'une image à l'image voisine est de préférence compris entre 30% et 60% ; il peut varier d'une image à l'autre comme on peut le voir sur la figure 3b. De préférence, le champ de vision couvert par l'ensemble de ces images est celui d'un tour complet d'horizon comme c'est le cas de la figure 3b et des figures 7 et 8. En effet le procédé trouve avantage à disposer d'une fermeture de boucle c'est-à-dire d'un recouvrement entre une image déjà acquise (la première par exemple mais pas nécessairement) et la dernière (par exemple mais pas nécessairement au sens où l'avant dernière ferait tout autant l'affaire). Cette fermeture de boucle est réalisée :
- sur un tour complet d'horizon avec un seul balayage en élévation (on obtient 1 bandeau), de manière à obtenir un recouvrement en gisement,
- sur une portion du tour complet avec plusieurs balayages étagés en élévations selon différents bandeaux (pour chaque élévation, on obtient un bandeau par balayage) par un mouvement de type rectangulaire ou elliptique de la ligne de visée (LdV) du premier dispositif d'imagerie, de manière à obtenir un recouvrement en gisement et en élévation des bandeaux correspondant respectivement aux balayages, comme on peut le voir figures 4 et 6,
- en combinant les deux approches précédentes et en réalisant plusieurs tours d'horizon à la même élévation moyenne ou à des élévations moyennes distinctes comme sur la figure 5.

Dans les situations où la réalisation d'une acquisition sur un tour complet n'est pas accessible, on se limite à un balayage avec des mouvements de la LdV à différentes élévations, sous forme d'ellipses ou de '8' par exemple. Ce type d'observation est insuffisant pour corriger certains paramètres internes comme par exemple la focale, en absence de GCP (acronyme de l'expression anglo-saxonne Ground Control Point) sous forme d'amers terrestres ou d'objets célestes, mais permet d'affiner des valeurs de quelques grandeurs observables comme la dérive angulaire par exemple. Pour parvenir à affiner une valeur de focale du dispositif d'imagerie dans une telle situation, on exploitera avantageusement 2 directions de référence dans la séquence d'images acquises.

Les longueurs d'onde correspondant aux images acquises en PBT peuvent être dans différentes bandes spectrales avec :
- une sensibilité de jour visible couleur, Proche Infra-Rouge (PIR),
- une sensibilité de jour et de nuit en bandes SWIR (Small Wave), MWIR (médium wave) ou LWIR (Long Wave).

Plusieurs modes d'acquisition des images et de traitement des images acquises peuvent être envisagés.

L'acquisition, qui peut être manuelle ou automatique (Pan & Tilt, ou plus généralement réalisée au moyen d'un système optronique monté sur plate-forme avec ou sans asservissement) peut être réalisée selon les modes suivants :
∘ (MAV) un mode d'acquisition vidéo qui dispose d'une capacité d'acquisition haute cadence (ex 10 à 100Hz), schématisé figure 5a ;
∘ (MAI) un mode d'acquisition image par image qui permet l'acquisition des images une à une avec un temps d'acquisition plus conséquent (par exemple de quelques 0.1 à 1 Hz) comme illustré figure 5b. Le déclenchement des acquisitions peut être manuel ou programmé, en particulier sur un système utilisant une plate-forme Pan & Tilt ;
∘ (MAM) un mode d'acquisition mixte qui construit l'information d'image en entrée des traitements, en insérant dans une séquence acquise en MAV, des images acquises en MAI (voir fig 5c). L'intérêt de cette approche est décrit un peu plus loin.

Pour le traitement, différentes options d'implémentation peuvent être utilisées :
∘ (MTB) une Méthode de Traitement Batch traite les informations en accédant à l'ensemble des images mémorisées ou archivées par lot ;
∘ (MTD) une Méthode de Traitement Dynamique, réalise les traitements à la volée lors de l'acquisition des images avec pour besoin de n'accéder simultanément qu'à tout au plus 2 ou 3 images à un instant donné ;
∘ (MTS) une Méthode de Traitement par Segment ou morceau de la vidéo traite l'un après l'autre des secteurs angulaires comme des portions angulaires en azimut (par exemple parties ¼ ou ½ de tour d'horizon) ou en élévation (par exemple assemblage de bandeaux).

Pour l'acquisition des images, lorsque le premier dispositif dispose d'une capacité d'acquisition haute cadence (MAV avec cadence généralement ≥ 10Hz), les images acquises sont mémorisées à la cadence vidéo sur le tour d'horizon. Les recouvrements entre images étant a priori surabondants, une étape du procédé permet de déterminer les images de cette vidéo à retenir. Pour cela on utilise par exemple :
- un algorithme de type Kanade-Lucas 'An Iterative Image Registration Technique with an Application to Stereo Vision 1981', alimenté par des points de Tomasi "Good Features to Track 1994", qui estime les translations entre images ;
- une décimation de la vidéo selon les recouvrements calculés, le FOV (« Field Of View ») du dispositif d'imagerie et le recouvrement objectif entre images.

Lorsque le système d'acquisition dispose d'un inclinomètre mais que ses mesures d'élévation ne peuvent être synchronisées aux dates des différentes acquisitions image - ou de manière plus large à d'autres données auxiliaires images (DAI) qui peuvent être outre ces dates d'acquisition, des mesures approchées permettant de connaître la position du système, tout ou partie de l'orientation des images ou des paramètres approchés du dispositif d'imagerie comme une focale approchée - le processus peut être conduit en 2 passes :
- la première passe est réalisée comme en mode vidéo (MAV), sans enregistrer les DAI avec les images correspondantes,
- la seconde passe se fait en mode d'acquisition image par image en enregistrant les DAI avec les images correspondantes. Cette passe ne nécessite pas de recouvrement des images acquises (voir Fig 7c). Plus précisément, un échantillonnage du tour d'horizon est réalisé de façon à disposer dans des azimuts distincts de plusieurs images et données auxiliaires images correspondantes telles que les mesures d'élévation ; typiquement moins de 10 images (et des mesures correspondantes) permettent de disposer d'une information suffisante. L'objectif est de disposer des recouvrements de ces images avec celles de la passe précédente et de maintenir la LdV du système optronique pendant une durée suffisante afin de disposer d'une mesure d'élévation synchrone pour chaque acquisition. Les images de cette passe sont ensuite systématiquement insérées à celle de la première passe pour constituer la séquence d'images d'entrée pour les traitements des étapes suivantes avec pour caractéristique de disposer d'une élévation de qualité compatible de l'objectif de précision.

Dans le cas d'acquisition d'image par image (MAI), l'opérateur doit prendre quelques précautions afin d'assurer un recouvrement des images. Dans le cas d'acquisition en mode vidéo (MAV), les recouvrements sont souvent importants et on ajoute de préférence au procédé une étape de tri automatiquement des images en éliminant des images ou des descripteurs trop redondants.

Lorsque le premier dispositif d'acquisition d'images dispose de plusieurs champs et/ou de zooms, l'acquisition de la phase « baptême terrain » peut être réalisée en grand champ de façon à réduire le délai d'acquisition mais aussi pour éventuellement disposer d'une probabilité plus forte d'embrasser des amers sur une image unique.

De manière pratique :
- En mode MAI, l'opérateur commande l'orientation du premier dispositif d'acquisition d'images et un recouvrement suffisant des images en déplaçant le dispositif d'acquisition d'image et en déclenchant des enregistrements d'images une par une à chaque orientation qu'il retient. Dans ce mode le nombre M d'images à acquérir est de l'ordre M≈α/[FOV.(1-η))], où η est le recouvrement moyen entre images exprimé en %, FOV est le FOV longitudinal de l'image exprimé dans la même unité que l'angle α qui représente l'angle horizontal balayé lors des acquisitions. Pour une acquisition sur le tour complet d'horizon α =360°, et avec par exemple un dispositif d'acquisition d'images de champ latéral 6° et un recouvrement entre images de 60%, le nombre d'images à acquérir est de M=150 images. Ce nombre d'images peut être réduit de moitié si l'on se contente d'un recouvrement vertical de 20% du champ mais cette dernière approche ne permet pas a priori d'obtenir autant de descripteurs, ni donc autant de « bons » descripteurs, ce qui peut avoir un impact sur la qualité de l'estimation.
- En mode MAV, l'acquisition est réalisée automatiquement par secteur angulaire (avec l'un des 2 modes précédents vidéo ou manuel) et l'acquisition est éventuellement stoppée lorsque la mémoire atteint un certain seuil. A ce stade les images acquises sont traitées de façon à extraire l'information descripteurs. Outre les descripteurs pour alimenter la BDD (Base de Données des Descripteurs), l'opérateur peut retenir une à quelques images pour positionner des amers, la mémoire étant libérée des autres images.
   Outre ces acquisitions guidées par l'utilisateur, le dispositif peut aussi être mis en œuvre avec une plate-forme disposant d'un mécanisme « Pan and tilt » ou tout autre mécanisme permettant de programmer l'orientation des acquisitions dans des directions spécifiques relativement à la plate-forme.

Pour le traitement des images, le choix pratique de l'une des méthodes de traitement est conditionné par la mémoire et la capacité de calcul (CPU) disponibles. Lorsque la mémoire (en regard de la taille de la vidéo) et la capacité de calcul du processeur (CPU en regard du délai acceptable pour l'utilisateur) l'autorisent, la méthode de traitement par batch (MTB) est recommandée dans la mesure où elle autorise la gestion simultanée de l'ensemble de l'information (dont recouvrements multiples) et offre un meilleur contrôle de cohérence des paramètres estimés. Dans le cas d'insuffisance mémoire ou CPU un traitement dynamique traitera les données extraites des images l'une après l'autre.

Le choix de la méthode de traitement impacte directement la technique d'estimation retenue dans l'étape E1 (Fig 1). MTB suggère une approche batch de type moindres carrés Gaus-Newton ou Levenberg-Marquard ; alors que la méthode de traitement dynamique (MTD) oriente vers un Filtre de Kalman Etendu (EKF pour Extended Kalman Filtre) ou encore UKF (pour Unsected Kalman Filter).

Lorsque le premier dispositif d'acquisition d'image (ou dispositif d'imagerie) dispose d'une mémoire trop faible pour stocker toutes les images d'un tour d'horizon on traite l'acquisition :
- soit avec MTB mais en libérant progressivement la mémoire des images et stockant les informations des descripteurs extraits,
- soit avec méthode MTD ou la méthode de traitement par segment (MTS).

En sortie de cette étape le système dispose d'une séquence d'images avec recouvrement adéquats et sur lesquelles les traitements des étapes suivantes vont être opérés.

De préférence, quel que soit le mode d'acquisition des images, on choisit une image de référence parmi ces images.

B1) extraction automatique dans les images, de descripteurs d'intérêt définis par leurs coordonnées images et leurs caractéristiques radiométriques, avec au moins un descripteur de direction inconnue dans chaque recouvrement 21 d'images (un descripteur suffit si l'on dispose d'une mesure d'élévation avec inclinomètre par exemple sinon prévoir au moins deux descripteurs). On exploite aussi les descripteurs extraits dans les parties d'images sans recouvrement puisqu'une fois les paramètres du modèle de prise de vue caractérisés, ils peuvent bénéficier d'une orientation de qualité susceptible d'être utilisée dans la phase d'exploitation en ligne. L'opérateur peut aussi définir manuellement des descripteurs en désignant des détails et leurs correspondances dans des images. Ces informations peuvent aussi servir à :
- orienter relativement les images entre elles dans l'étape ultérieure C1, puis en absolu dans l'étape ultérieure E1 en PBT,
- déterminer l'orientation d'une image en POL dès lors que les détails désignés disposent d'une signature radiométrique suffisamment caractéristique.

Les descripteurs détectés dans les images sont à titre d'exemples non limitatifs de nature :
- SIFT acronyme de l'expression anglo-saxonne Scale Invariant Features Translation. Dans ce cas ce sont des points clés caractérisés par un vecteur d'information décrivant l'histogramme des gradients autour du pixel considéré. Cette étape est typiquement réalisée selon la description initialement due à Lowe 2001.
- SURF acronyme de l'expression anglo-saxonne Speeded Up Robust Features. Comme SIFT, cette approche localise des détails (primitives) dans des images et les caractérise dans une alternative plus rapide que l'approche SIFT.
- FREAK acronyme de l'expression anglo-saxonne Fast Retina Keypoint (Alahi et al IEEE 2012),
- Points de Haris et moments images.

En pratique l'algorithme d'extraction de descripteurs est configuré de façon à s'assurer que :
- Le nombre de descripteurs extraits est satisfaisant pour l'application (par exemple au moins 2 par zone de recouvrement). Cette caractéristique peut être en particulier plus difficile à vérifier dans des zones avec peu de détails, du fait de la constitution de la scène, ou d'éclairements particuliers du détecteur. Pour cela on agit principalement au niveau des paramètres spécifiques de l'algorithme d'extraction de descripteurs (seuil, niveau de traitement pyramidal, ...).
- La densité spatiale des descripteurs n'est pas trop importante. Dans cette situation on augmente d'une part inutilement la taille des systèmes à estimer dans la suite et d'autre part on accroit le risque de mal associer des descripteurs. En pratique l'algorithme de sélection éliminera des descripteurs correspondant à des directions angulairement trop proches en regard du FOV du dispositif d'imagerie.

Certains de ces descripteurs sont connus pour être plus ou moins robustes aux changements entre images :
- d'échelle (ou variation de zoom),
- d'orientation (rotation relative d'une image à l'autre),
- de translation.

Quel que soit l'algorithme utilisé, un descripteur est associé à un pixel correspondant à un détail de la scène qui présente une signature spécifique relativement à son voisinage dans la bande spectrale du dispositif d'acquisition des images.

En plus de la liberté d'échelle, en choisissant un zoom et/ou un champ spécifique du dispositif d'acquisition, l'acquisition peut être choisie dans une bande spectrale spécifique si le premier dispositif d'acquisition dispose de plusieurs voies (exemple IR/ VIS). En plus du compromis champ / nombre d'images déjà évoqué, l'intérêt de l'opérateur est de choisir la voie présentant les meilleurs contrastes. Dans le cas d'une utilisation nocturne le choix est évidemment limité aux voies IR ou active dont peut disposer le dispositif d'acquisition.

C1) à partir des descripteurs extraits des recouvrements, mises en correspondances (MEC) automatiques (aussi désigné appariements) des descripteurs des recouvrements, d'une image à l'autre image voisine et estimation automatique de la rotation relative des images entre elles éventuellement par le biais de l'image de référence. Cette étape est souvent désignée recalage grossier ou approximatif. La détection de détails de la scène donnant lieu à d'éventuels recouvrements multiples (plus de 2 images) peut être réalisée dans une phase ultérieure après qu'une première orientation relative entre images ait été effectuée ; ceci afin de guider la recherche de descripteurs pouvant être liés à plus de 2 images.

Cette estimation de l'orientation et des appariements entre descripteurs peuvent être conduits simultanément en procédant par exemple de la manière suivante connue de l'homme du métier :
a. calcul d'une première transformation relative avec un nombre minimal de 2 MEC avec un algorithme de type TRIAD,
b. estimation des 'bonnes' MEC (inliers) avec un algorithme de type RANSAC (ou PROSAC) (acronymes des expressions anglo-saxonnes RANdom SAmple Consensus, et PROgressive SAmple Consensus), afin de rejeter les MEC aberrantes (outliers) entre images,
c. estimation d'une transformation optimale, sur la base de toutes les bonnes mises en correspondance (inliers), avec un algorithme de type « q-method » ou « QUEST » (QUaternion ESTimator) ou « SVD method » ou de Gauss-Newton par exemple.

D1) Identification dans les images automatiquement ou par un opérateur, d'au moins une référence directionnelle absolue connue 22 comme montré figure 3b, telle qu'un amer terrestre ou un objet céleste, de précision compatible de la performance souhaitée, et détermination automatique ou par l'opérateur des coordonnées images de chaque référence. Cette étape a pour but d'associer les coordonnées images à la direction géographique ou spatiale (azimut, élévation) des références utilisées.
- dans une procédure automatique, on peut par exemple corréler automatiquement une image associée à une donnée de référence avec des zones images autour des descripteurs de la PBT. Notons que cette approche contraint à disposer d'images associées aux références dans des CPDV proches de celles réalisées en PBT. A cette fin une orientation absolue approchée des images PBT au moyen d'un compas magnétique par exemple peut faciliter la tâche en réduisant grandement la combinatoire d'appariement,
- dans une approche non-automatique on peut envisager :
   ∘ un mode semi-automatique spécifique, où l'opérateur pointe la référence au centre image et réalise des mesures spécifiques (angulaires avec inclinomètre et compas magnétique par exemple et potentiellement de distance avec un télémètre laser harmonisé au centre image)
   ∘ un mode de pointage manuel où l'opérateur désigne dans une image la référence de façon à associer ses coordonnées images à sa direction spatiale.

Lorsque la référence est un amer terrestre, il est facile de déterminer les caractéristiques de sa direction (azimut et élévation) à partir de la position de la caméra. La précision de la direction est alors fonction de la précision des coordonnées de l'amer, de celles de la position caméra, de la précision de désignation de l'amer ainsi que de la distance entre amer et caméra.

Lorsque la référence est un amer céleste, le corps peut par exemple être centré sur l'axe optique puis sa direction est déterminée à partir de la position caméra, d'une date UTC (par exemple disponible sur GPS) et d'éphéméride de corps céleste ou d'un catalogue astrométrique. L'erreur sur la direction dépend alors de la qualité sur ces grandeurs en azimut et en élévation avec pour l'élévation une contribution complémentaire de résidus de correction de réfraction atmosphérique.

Lorsque le balayage a couvert un tour complet d'horizon, une seule référence peut suffire ; mais lorsque le balayage a couvert une portion de tour complet d'horizon, au moins deux références sont à identifier dans les images. En pratique il suffit d'écrire les équations du modèle de prise de vue qui relient le vecteur de l'espace joignant la position du senseur (x0,y0,z0) à la position (xn,yn,zn) de la référence de la scène, et sa position dans l'image caractérisée d'après ses coordonnées. Le modèle intègre :
- les paramètres internes caractérisant la spécificité des propriétés géométriques au sein du dispositif d'imagerie,
- les paramètres externes fixés d'après l'attitude de l'image ou du dispositif d'imagerie et
- sa position spatiale.

Dans cette étape, des paramètres d'orientation image ont été estimés de manière approchée. L'estimation brute de ces paramètres va alimenter en valeurs initiales l'étape suivante qui va réaliser l'estimation définitive de leurs valeurs.

E1) A partir des descripteurs des recouvrements mis en correspondance, de la direction et des coordonnées images de chaque référence, estimation automatique de l'attitude de chaque image, et éventuellement d'une position plus précise du premier dispositif d'imagerie et de ses paramètres internes dont la focale utilisée pendant cette phase PBT. Bien que les paramètres internes et la position soient prédéterminés, ils peuvent être connus avec une précision insuffisante (c'est-à-dire incompatible de l'objectif de qualité finale de direction comme illustré ci-dessous) ; cette étape souvent désignée recalage fin permet de les définir plus finement.

On illustre par un exemple numérique le besoin de qualité du paramètre interne que constitue la focale. Pour cela, on considére un détecteur matriciel de taille w=1000 pixels et une optique lui conférant un FOV de 10°. La focale du dispositif d'imagerie est f= w / (2 tan(FOV/2)) soit une focale de 5715 pixels pour une taille moyenne de pixel (ou l'IFOV) de 175 µrad. Si l'on suppose la focale initiale connue à 1% près - valeur qui se situe dans la plage d'incertitude traditionnelle sur cette grandeur - cela correspond à une erreur (de type sur/sous-zoom d'image à image) de 5 pixels environ correspondant à un écart angulaire de 0.9 mrad, soit une erreur d'image à image qui serait d'environ 1mrad (de l'ordre de la performance globale recherchée) mais qui au bout de quelques images, serait rapidement incompatible de la classe finale de qualité de direction recherchée (l'effet d'erreur de zoom s'accumulant). Ce simple calcul indique l'importance que le processus proposé soit en mesure de ré-estimer le paramètre interne que constitue la focale du dispositif d'imagerie.

On peut utiliser différentes approches pour cette étape parmi lesquelles on peut citer :
- BA (Bundle Ajustment en anglais) ou Ajustement de Faisceaux pour réajuster de manière cohérente l'ensemble des paramètres de prise de vue des images et les caractéristiques des observations (ici descripteurs MEC).
- PNP acronyme de l'expression anglo-saxonne Perspective N Points, dont la procédure de relèvement ou P3P basée sur 3 points imagés de coordonnées géographiques,
- P2PA, qui est un P2P actif basé sur l'hypothèse que la position du dispositif d'imagerie est fixe et connue, et que le balayage est circulaire,
- PNP avec ajustement de faisceaux,

Selon le besoin utilisateur en termes d'application et de contrôle du bon fonctionnement des algorithmes automatiques, on peut prévoir une étape :
- de construction et d'affichage d'une image panoramique à partir des images finement recalées, chaque pixel de l'image panoramique étant associé à une direction absolue,
- d'affichage d'informations associées aux informations des descripteurs et de la carte de description spatiale des descripteurs (CDSD).

De manière générale des observations de type distance peuvent être acquises au niveau d'un système optronique équipé d'un télémètre harmonisé avec la ligne de visée (LdV) du système, comme par exemple avec un système portable sur lequel l'utilisateur peut manuellement orienter la LdV sur un détail du paysage et le télémétrer. Ce détail correspond soit à un descripteur (coordonnées et direction géographiques initialement inconnues) soit à un amer (coordonnées géographiques connues a priori) et l'observation distance est alors utile dans la procédure d'estimation (BA ou PNP) mise en œuvre lors de cette étape E1.

F1) A partir de l'attitude de chaque image, de la position et des paramètres internes éventuellement plus précis du premier dispositif d'imagerie, et des coordonnées images de chaque descripteur (les descripteurs des recouvrements et les autres), calcul automatique des directions absolues de ces descripteurs selon le modèle géométrique de prise de vue du dispositif d'imagerie. Ces descripteurs sont archivés dans une base de données (BDD) avec leurs caractéristiques radiométriques et leurs directions absolues.

Cet archivage est de préférence réalisé de façon à faciliter la recherche d'appariement en POL. Pour cela les descripteurs sont ordonnés, notamment en azimut, pour utiliser l'agencement de leurs valeurs avec une technique de hachage géométrique dans l'étape d'appariement en ligne, en particulier lorqu'une mesure approchée d'azimut est disponible (exemple par l'emploi de compas magnétique).

On peut éventuellement construire une carte de distribution spatiale des descripteurs (CDSD) qui renferme des cellules correspondant à des angles solides ou zones spatiales. Ces cellules sont déterminées et positionnées en azimut et élévation selon un pas horizontal et vertical choisi par le processus (ces pas angulaires sont généralement plus fins mais de l'ordre du FOV du dispositif d'imagerie). Chacune des cellules indique le nombre de descripteurs et/ou de directions (celles des descripteurs et des références) trouvés dans cet angle solide :
- aucun descripteur
   ∘ si la zone n'est couverte par aucune image,
   ∘ si le contenu des images sur la zone ne donne lieu à la création d'aucun descripteur dans la cellule considérée,
- des descripteurs non appariés car provenant de parties d'images qui ne présentent pas de recouvrement,
- des descripteurs appariés avec leur ordre de multiplicité, un même descripteur pouvant être associé avec plus de 2 images si le recouvrement entre les images est supérieur à 50% ; les recouvrements ont lieu en azimut ainsi qu'éventuellement en élévation.

Dans les cas où le nombre de descripteurs est très dense et la scène se présente sur une variation d'élévation importante (par exemple pour des zones à fort relief, fond d'étoiles, ...), la CDSD est de préférence construite sous forme de cellules à surface régulière. Pour ce faire on préconise l'utilisation d'une représentation de type HEALPIX (Hierarchical Equal Area isoLatitude Pixelization) - voir par exemple "HEALPix: A Framework for High-Resolution Discretization and Fast Analysis of Data Distributed on the Sphere" 2005.

La CDSD peut être synthétisée sous forme binaire :
- soit pour présenter des zones ne disposant pas de descripteurs,
- soit pour présenter des zones disposant d'un nombre de descripteurs supérieur à une valeur donnée.

La CDSD peut être construite dans un repère :
- relatif lorsque les directions des descripteurs et des références sont repérées par rapport à un repère associé à une image de référence,
- absolu approché lorsque les directions sont orientées à partir de mesures magnétiques par exemple,
- absolu définitif lorsque les directions sont orientées dans un repère estimé après un ajustement de faisceaux en fin de phase de baptême terrain avec une qualité compatible de l'objectif visé.

Lorsqu'on dispose d'un compas magnétique par exemple, les directions peuvent tout de suite être pré-situées dans la bonne cellule (avec une précision meilleure qu'à un degré près). Pour cela, on détermine la cellule de la CDSD correspondant à la direction du descripteur considéré en tronquant ou interpolant la direction du descripteur pour le rapprocher du centre d'une cellule particulière. Une fois que tous les descripteurs de toutes les images sont affectés aux cellules de la CDSD, et après la phase d'ajustement de faisceau, chaque direction est repositionnée avec une qualité héritant de la (des) direction(s) de référence et la CDSD est ajustée du repère relatif ou approché au repère absolu fin.

On dispose ainsi d'une CDSD sous forme de tableau dont une cellule correspond à un angle solide autour du dispositif d'imagerie et qui contient le nombre de descripteurs extraits de l'ensemble des images (recouvrements compris).

La CDSD peut être filtrée de manière à ne renfermer pour chaque cellule spatiale qu'un nombre de descripteurs déterminé en vue d'accélérer l'exploitation pour la phase en ligne. Cependant il est plus efficace de filtrer les descripteurs en étape B1.

L'élimination de descripteurs dans une cellule, peut notamment être conduite selon les critères suivants :
- écartement ou proximité des descripteurs dans la cellule,
- intensité radiométrique de la signature du descripteur,
- qualité de la direction associée dès lors que celle-ci a été renseignée au moyen des informations d'une phase d'orientation préliminaire.

La CDSD peut dans un premier temps être exploitée dans la phase baptême terrain pour :
- déterminer le domaine d'espace sur lequel les images sont acquises ;
- déterminer la zone de non couverture en descripteurs sur le volume balayé lors de cette phase baptême,
- prévenir l'opérateur pour qu'il puisse éventuellement réacquérir ces zones avec de nouvelles images s'il les juge pertinentes ;
- filtrer des descripteurs sur des zones où ils sont trop nombreux et donc redondants sur le plan d'apport en information géométrique et seraient 'similaires' en matière de signature de leur signaux radiométriques.

De manière générale, la position du premier dispositif d'imagerie est déterminée par des moyens de positionnement équipant ledit dispositif ; elle peut aussi être estimée à partir de plusieurs références.

Cette phase de baptême terrain (PBT) étant effectuée, la phase opérationnelle de détermination de direction ou phase d'opération en ligne (POL) est abordée. Elle comporte les étapes A2 à E2, telles que définies dans la revendication 1. Ci-après on va détailler ces étapes sur la base des exemples.

A2) Acquisition automatique ou par un opérateur, de l'image (éventuellement de plusieurs images) de l'objet dont on cherche à déterminer la direction, dite image courante 20 montrée figure 7, à partir d'un second dispositif d'imagerie de position déterminée, qui est de préférence le même que pour la phase précédente mais qui peut être différent ; sa position fixe est la même qu'en phase PBT.

On notera que l'objet dont la direction doit être déterminée en POL, peut éventuellement être absent dans les images 2 de la PBT, car absent de la scène en PBT (l'objet étant par exemple un personnage en mouvement ou un véhicule déplaçable). Les descripteurs présents dans l'environnement de l'objet doivent a priori être en nombre suffisant et avoir de 'bonnes caractéristiques' pour qu'en les alliant à la procédure robuste de MEC la présence d'un nouvel objet dans l'image en POL ne perturbe pas la MEC des descripteurs de l'image courante à ceux de la PBT comme on va le voir plus loin. Ainsi l'attitude de l'image en POL peut être estimée en présence de certains changements dans la scène entre les instants de la PBT et POL.

Des images 2 ne contenant pas l'objet à orienter peuvent également être acquises lors de cette phase POL comme montré figure 7. Lorsqu'une de ces images 2 présente un recouvrement avec des images de la PBT et qu'une autre présente un recouvrement avec une image 20, alors :
- l'image 20 est traitée comme dans le cas d'une image unique en POL,
- au préalable l'ensemble des images 2 (autres que l'image courante 20) est traité comme en PBT pour construire un 'pont' entre l'image 20 de l'objet et la BDD existante. Leur traitement permet d'augmenter la BDD en descripteurs et la CDSD en couverture spatiale. La BDD et la CDSD peuvent être ainsi enrichies aux cours de différentes POL ayant pour spécificité de disposer d'une couverture complémentaire à la CDSD courante. L'enrichissement est réalisé après affinement des directions de l'ensemble des anciens et nouveaux éléments (descripteurs et images).

B2) Extraction automatique de descripteurs dans chaque image courante 20.

C2) Mise en correspondance automatique des descripteurs de chaque image courante avec les descripteurs dont la direction absolue a été calculée lors de la phase « baptême terrain », pour déterminer la direction absolue des descripteurs de chaque image courante.

Ces descripteurs appariés de chaque image courante sont de préférence associés à ceux de la base de données des descripteurs.

Si après extraction des descripteurs leur nombre ou qualité sont jugés insuffisants ou si l'image contenant l'objet se situe dans une zone où la CDSD mérite densification, alors on peut réaliser un ajustement de faisceaux local pour affiner les directions des descripteurs en vue d'enrichir la base de données des descripteurs avec les meilleures informations et mettre à jour la CDSD.

Plusieurs informations peuvent être utilisées pour faciliter la recherche de MEC entre descripteurs POL et ceux de la BDD de la PBT. En désignant par f1 (en PBT) et f2 (en POL) les focales/zoom des dispositifs d'imagerie et par n1 (en PBT) et n2 (en POL) deux niveaux d'échelle internes aux traitements d'extraction d'information multi-échelles, on peut exploiter :
- Au niveau des informations de niveau radiométrie descripteur : Recherche de MEC au bon niveau d'échelle f1. 2ⁿ¹ = f2. 2ⁿ². Soit en POL le niveau d'échelle n2 à utiliser pour tenter d'associer un descripteur de la PBT (de niveau d'échelle n1) se déduit des focales approximatives en POL (f2) et PBT (f1).
- Au niveau des informations géométriques, on ne résout généralement pas un problème comme si l'on était perdu dans l'espace 'lost in space' puisqu'on on dispose le plus souvent d'une orientation approchée de l'image que l'on doit typiquement améliorer d'un facteur 10 à 30. Ceci en vue de déterminer des directions de pixels correspondant à des objets de l'image avec la qualité requise. Ainsi partant de la direction approchée de la LdV (ou de l'orientation approchée de l'image) en POL et des erreurs associées, on génère une région ou un angle solide dans lequel on va chercher les correspondances de la BDD.

On peut exploiter les deux aspects précédents de manière conjointe ou individuelle, le premier seul si l'on ne dispose pas d'orientation approchée de l'image, le second seul pouvant aussi être acceptable dans la mesure où les focales des dispositifs des acquisitions PBT et POL sont du même ordre.

D2) A partir des directions absolues des descripteurs de chaque image courante 20, estimation automatique de l'attitude de chaque image courante 20 et éventuellement des paramètres internes du second dispositif d'imagerie dont la focale.

E2) A partir des coordonnées image de l'objet dans chaque image courante 20, de l'attitude de chaque image courante 20, de la position et des paramètres internes (éventuellement plus précis) du second dispositif d'imagerie, calcul automatique de la direction absolue de l'objet selon un modèle prédéterminé de prise de vue de chaque image courante 20.

La CDSD construite lors du baptême terrain peut être utilisée en ligne :
- afin d'évaluer dans une direction déterminée (pointage d'objet sur coordonnées) si la BDD est consistante sur ce voisinage, et ce avant même d'avoir réalisé une image courante,
- pour proposer éventuellement un champ de vision de travail dès lors que le dispositif d'imagerie dispose de plusieurs champs de vision. Dans le cas par exemple d'une PBT réalisée en petit champ (PC), il est conseillé d'acquérir une image courante en extrémité haute de zone utile, en grand champ (GC) de façon à garantir des descripteurs dans la moitié basse de l'image.

La CDSD comme la BDD peut aussi être enrichie en ligne. Par exemple lorsque le FOV d'une image courante s'étend au-delà de la zone courante caractérisée, les descripteurs extraits au-delà de la zone caractérisée viennent enrichir la BDD dès lors que l'image courante a pu être orientée en absolu après appariement de certains de ses descripteurs avec d'autres connus de la BBD.

De manière générale, la position du second dispositif d'imagerie est déterminée par des moyens de positionnement équipant ledit dispositif ; elle peut aussi être estimée à partir de plusieurs références de la phase PBT.

Le système optronique considéré peut être une caméra optronique portable munie d'une ou de plusieurs voies permettant une vision de nuit et/ou de jour. Il comprend des moyens de type mémoire et unité de calcul et des interfaces appropriés pour mettre en œuvre le procédé afin de faciliter :
- En PBT : la saisie et l'acquisition des données, la présentation de résultats intermédiaires (qualité d'estimation, statistique sur les MEC, bandeau image reconstruit), et les caractéristiques et la répartition (CDSD) des descripteurs, les attitudes des images, la focale ou autre paramètre interne estimé.
- En POL : des éléments de contrôle comme les caractéristiques des descripteurs présents dans l'image courante, leur appartenance à une zone spatiale effectivement couverte par la CDSD avec un éventuel besoin complémentaire en description de la scène (voir figure 7), le nombre de mises en correspondance établies avec les descripteurs de la BDD, les informations directement exploitables comme l'orientation (ou l'attitude) de l'image (ou de manière partielle la direction de la LDV) et la localisation d'un objet en centre image dès lors que ce dernier a fait l'objet d'une mesure distance (cas d'un système optronique équipé d'un télémètre harmonisé avec la LdV par exemple).

Le premier et/ou le second dispositif d'imagerie peuvent être installés à bord d'une plate forme fixe, sur un trépied ou sur une Pan & Tilt. Dans le cas d'un dispositif d'imagerie monté sur trépied classique, l'opérateur déclenche manuellement les acquisitions d'images. Ce cas concerne aussi bien une caméra optronique portable qu'un téléphone portable munis des unités de traitement et interfaces appropriés pour développer le processus. Sur une plateforme Pan & Tilt l'acquisition peut être programmée avec un déplacement du dispositif d'imagerie en fonction de ses caractéristiques (zone à couvrir et FOV notamment) et des recouvrements souhaités entre images. Dans le cas d'un dispositif d'imagerie monté sur plate-forme mobile la mise en œuvre du procédé suppose une connaissance de la position du dispositif d'imagerie via celle de la plate-forme, même si celle-ci peut être affinée dans l'étape E1. Par ailleurs les directions de référence des descripteurs sont enregistrées dans un même repère géographique local pour l'ensemble des images de la séquence acquise.

Sur plusieurs téléphones portables récents, on trouve un mode d'acquisition image permettant de construire une image panoramique à partir de plusieurs images pouvant être acquises sur une portion ou un tour complet d'horizon. Un traitement qualifié de 'Panoramic Stitching' permet d'assembler les images individuelles afin de présenter une image globale panoramique. Contrairement à l'objectif du « stiching » qui est de disposer d'une plus grande image que celle permise par le FOV du senseur, l'objectif du procédé selon l'invention est d'orienter une image (a priori limitée au FOV du senseur) qui sera acquise ultérieurement au panoramique depuis une position donnée et de déterminer la direction absolue de l'un de ces pixels correspondant en général à un objet d'intérêt de la scène. Appliqué sur un téléphone portable, le procédé complète ainsi des algorithmes existant dans les téléphones récents dans le but de construire une BDD et une CDSD en vue de déterminer la direction d'un objet.

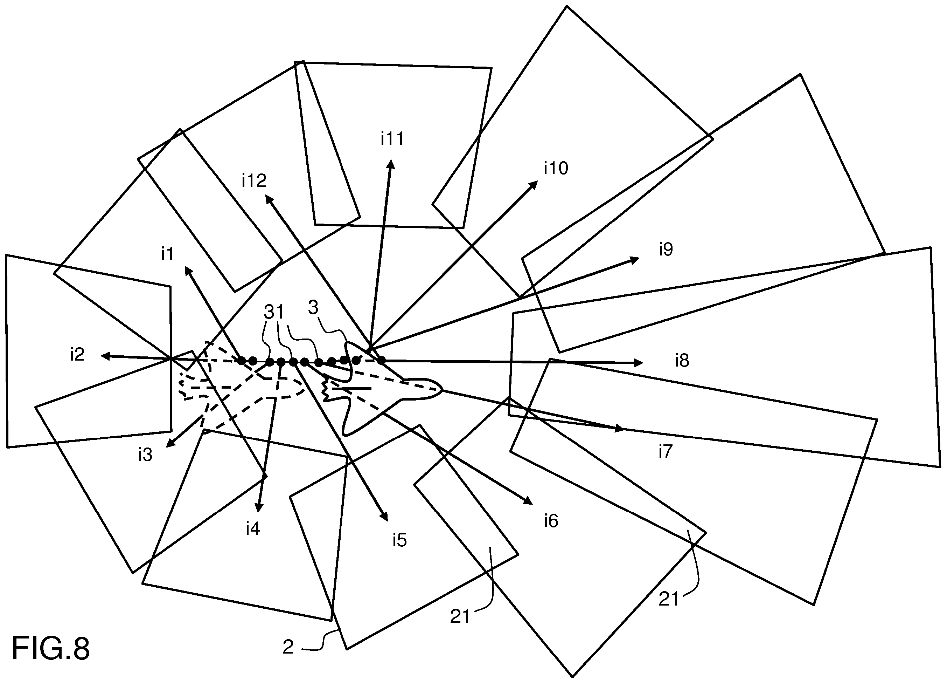

Le premier et/ou le second dispositif d'imagerie peuvent être installés à bord d'une plate-forme mobile telle qu'un aéronef 3 comme par exemple illustré figure 8. Dans ce cas, le système optronique équipé du dispositif d'imagerie est supposé disposer d'une agilité lui permettant d'orienter sa ligne de visée selon différentes directions sous la plate-forme. Le dispositif d'imagerie dispose d'un mode d'asservissement lui permettant d'assurer des motifs d'acquisition circulaire des images 2 comme schématisé sur la figure, quelle que soit la trajectoire de la plate-forme, dans la limite de ses masquages éventuels. L'acquisition circulaire est indiquée par la série de 12 images i1 à i12 à recouvrements 21, respectivement acquises à partir de 12 positions 31. Dans cette situation, les descripteurs extraits des images représentant le sol sont caractérisés comme précédemment par leur direction absolue ou directement par leurs coordonnées géographiques si l'on dispose d'un modèle numérique de terrain (MNT) de la scène. L'intérêt de cette approche est d'établir naturellement les coordonnées géographiques dans un repère commun (par exemple WGS84). Les directions établies dans chaque image dans le repère géographique local porté (RGLP) correspondant à la position de la plate-forme à la date d'acqusition de l'image doivent être établies dans un même RGL commun (RGLC). Pour ce RGLC on peut choisir pour origine la Position de Référence (PR) correspondant à celle observée lors de l'acqusition d'une image de PBT par exemple la première ou dernière image. De manière générale, chaque direction 'vₘ' dans un RGL associé à une image correspondant à la position Pm peut être transférée en une direction 'vₙ' dans le RGL d'une position Pn en utilisant une relation linéaire de la forme vₙ = R(Pₙ) R^{T}(Pₘ) vₘ. Expression dans laquelle les éléments R sont des matrices de rotation (3x3) dont les éléments ne dépendent que des coordonnées géodésiques (longitude et latitude) de l'image lors de l'acquistion via des fonctions trigonométriques et l'exposant 'T' indique la transposée de la rotation correspondante. Lorsque les positions Pn et Pm ne sont pas trop éloignées, une relation différentielle peut être aussi utilisée pour caractériser sous forme d'angles élémentaires l'écart de la direction vₙ par rapport à la direction vₘ.

En pratique les systèmes aéroportés accèdent aux paramètres cinématiques de position 31, vitesse, accélération de la plate-forme ainsi qu'à son attitude. Ils disposent généralement de moyens propres permettant d'établir l'attitude de l'image en repère géographique local et donc dans tout type de référentiels. Ces informations disposent d'erreurs associées et servent à initialiser et linéariser les équations non linéaires participant à la procédure d'ajustement de faisceau.

En sortie de procédure les valeurs des paramètres initiaux sont améliorées et caractérisées par une covariance.

Si le système accède à un ou plusieurs GCP, alors la performance d'ajustement de faisceau peut se trouver améliorée de manière significative.

Pour fixer les idées, un système où les orientations initiales des images varient de un à quelques milli-radians, engendre une erreur minimale de 30 m à 30km. Par un raisonnement élémentaire, on peut évaluer l'effet de cette erreur en azimut et donc en positionnement tangentiel. On note qu'une erreur circulaire en élévation se traduit par une erreur au sol bien plus importante pour des visées obliques puisque l'erreur circulaire est approximativement multipliée par le rapport de la distance (entre le système et le point à localiser) à la hauteur du système au sol.

L'accès à un GCP d'une qualité de 5m à 20 km permet d'accéder à une qualité d'orientation de ¼ de milli-radian soit 4 fois mieux que la performance initiale ; un GCP de 3m à 30 km permettra d'améliorer la performance d'orientation d'un ordre de grandeur avec une performance angulaire potentielle de 1/10 milli-radian ! Signalons enfin que l'algorithme d'ajustement de faisceaux utilisé par exemple lors de l'étape de recalage fin, va propager le bénéfice d'une telle référence absolue sur l'orientation de l'ensemble des images en recouvrement.

Sur plate-forme mobile de type aéronef (voire navire ou véhicule) on insiste sur les particularités suivantes :
- les positions des différentes images sont substanciellement différentes mais connues tout en pouvant faire l'objet - comme les orientations des images - d'une estimation dans l'étape d'ajustement de faisceau.
- Dans cette mise en œuvre, l'attitude relative est en général assez bien connue (quelques dizaines de µrad sur une courte période si peu de manœuvre de la plate-forme) ce qui facilite les MEC des descripteurs (étape C1) et l'initialisation des estimations non-linéaires (étape E1). Par ailleurs l'orientation absolue des images est aussi assez bonne et de l'ordre du mrad (facilite l'étape D1) ; en revanche un biais de montage (qq mrad) sera de préférence modélisé dans les équations du modèle de prise de vue de façon à l'estimer au même titre que la focale dans l'étape E1.

Bien sûr, connaissant la direction de l'objet, on peut déterminer sa localisation géographique lorsque par exemple le dispositif d'imagerie est équipé d'un télémètre et/ou en utilisant des méthodes connues de l'homme du métier.

Ce procédé de détermination de la direction absolue d'un objet dans une image peut notamment s'implémenter à partir d'un produit programme d'ordinateur, ce programme d'ordinateur comprenant des instructions de code permettant d'effectuer les étapes du procédé. Il est enregistré sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

## Revendications

1. Procédé de détermination de la direction géographique absolue d'un objet d'une scène (1), avec une performance souhaitée en azimut et élévation de la classe de 0.1 à 1 milli-radian, le procédé comportant une phase d'apprentissage et une phase d'opération en ligne, la phase d'apprentissage comportant les étapes suivantes :
- acquisition par balayage circulaire au moyen d'une voie d'un premier dispositif d'imagerie optronique dans les domaines visible, Proche Infra-Rouge, Infra-Rouge Court, Infra-Rouge Moyen ou Infra-Rouge Lointain, de position fixe déterminée, d'une série d'images optroniques (2) partiellement recouvrantes, incluant une image ou plusieurs images de la scène (étape A1),
- extraction automatique dans les images, de descripteurs définis par leurs coordonnées images et leurs caractéristiques radiométriques, avec au moins un descripteur de direction inconnue dans chaque recouvrement (21) d'images (étape B1),
- à partir des descripteurs extraits dans les recouvrements entre images, estimation automatique de la rotation relative des images entre elles et mise en correspondance des descripteurs extraits dans les recouvrements (étape C1),
- identification dans les images, d'au moins une direction géographique de référence connue (22) de précision compatible de la performance souhaitée, et détermination des coordonnées images de chaque référence (étape D1),
- à partir des descripteurs extraits dans les recouvrements et mis en correspondance, de la direction et des coordonnées images de chaque référence, estimation automatique de l'attitude de chaque image et estimation de la focale du premier dispositif d'imagerie avec une précision compatible de la performance souhaitée, dite étape de recalage fin (étape E1),
- à partir de l'attitude de chaque image, de la position et de paramètres internes du premier dispositif d'imagerie dont la focale, et des coordonnées images de chaque descripteur, calcul des directions absolues des descripteurs selon un modèle prédéterminé de prise de vue du dispositif d'imagerie (étape F1),
la phase d'opération en ligne comportant les étapes suivantes :
- Acquisition d'au moins une image de l'objet dite image courante (20), à partir d'un second dispositif d'imagerie ayant la même position fixe que le premier dispositif d'imagerie, (étape A2),
- Extraction automatique de descripteurs dans chaque image courante (étape B2),
- Mise en correspondance automatique des descripteurs de chaque image courante avec les descripteurs dont la direction absolue a été calculée lors de la phase d'apprentissage, pour déterminer la direction absolue des descripteurs de chaque image courante (étape C2),
- A partir des directions absolues des descripteurs de chaque image courante, estimation automatique de l'attitude de chaque image courante (étape D2),
- A partir des coordonnées image de l'objet dans chaque image courante, de l'attitude de chaque image courante, de la position et de paramètres internes du second dispositif d'imagerie, calcul automatique de la direction absolue de l'objet selon un modèle de prise de vue de chaque image courante (étape E2).

2. Procédé automatique de détermination de la direction absolue d'un objet selon la revendication précédente, dans lequel la focale du premier dispositif d'imagerie est différente de la focale du second dispositif d'imagerie.

3. Procédé automatique de détermination de la direction absolue d'un objet selon l'une des revendications précédentes, dans lequel une position précise du premier dispositif d'imagerie de la phase d'apprentissage et/ou les paramètres internes du premier dispositif d'imagerie de la phase d'apprentissage sont estimés lors de l'étape de recalage fin.

4. Procédé automatique de détermination de la direction absolue d'un objet selon l'une des revendications précédentes, dans lequel les paramètres internes dont la focale du second dispositif d'imagerie de la phase en ligne sont estimés lors de l'étape d'estimation de l'attitude de chaque image courante.

5. Procédé automatique de détermination de la direction absolue d'un objet selon l'une des revendications précédentes, dans lequel les premier et second dispositifs d'imagerie sont un même dispositif d'imagerie.

6. Procédé automatique de détermination de la direction absolue d'un objet selon l'une des revendications précédentes, dans lequel les descripteurs de la phase d'apprentissage sont archivés dans une base de données avec leurs caractéristiques radiométriques et leurs directions absolues.

7. Procédé automatique de détermination de la direction absolue d'un objet selon l'une des revendications précédentes, dans lequel une carte de densité de la distribution spatiale des descripteurs est construite avant la phase d'opération en ligne, en déterminant et positionnant des cellules en azimut et élévation et en indiquant le nombre de descripteurs trouvés dans ces cellules.

8. Procédé automatique de détermination de la direction absolue d'un objet selon l'une des revendications précédentes, dans lequel la série d'images acquises lors de la phase d'apprentissage couvre un tour complet d'horizon.

9. Procédé automatique de détermination de la direction absolue d'un objet selon l'une des revendications 1 à 6, dans lequel la série d'images acquises lors de la phase d'apprentissage couvre une portion de tour complet d'horizon et dans lequel au moins deux références sont identifiées dans les images.

10. Procédé automatique de détermination de la direction absolue d'un objet selon l'une des revendications précédentes, dans lequel la position du premier dispositif d'imagerie est déterminée par des moyens de positionnement équipant ledit dispositif ou est estimée à partir de plusieurs références.

11. Procédé automatique de détermination de la direction absolue d'un objet selon l'une des revendications précédentes, comportant une étape de construction d'une image panoramique à partir des images finement recalées, et dans lequel chaque pixel de l'image panoramique est associé à une direction absolue.

12. Procédé automatique de détermination de la direction absolue d'un objet selon l'une des revendications précédentes, dans lequel la série d'images acquises sont des images vidéo.

13. Procédé automatique de détermination de la direction absolue d'un objet selon l'une des revendications précédentes, dans lequel la série d'images est acquise image par image.

14. Procédé automatique de détermination de la direction absolue d'un objet selon l'une des revendications précédentes, dans lequel chaque image acquise est associée à une élévation.

15. Procédé automatique de détermination de la direction absolue d'un objet selon l'une des revendications précédentes, dans lequel chaque référence est un amer terrestre ou un objet céleste.

16. Procédé automatique de détermination de la direction absolue d'un objet selon l'une des revendications précédentes, dans lequel l'objet est absent dans les images acquises en phase d'apprentissage.

17. Un produit programme d'ordinateur, ledit programme d'ordinateur comprenant des instructions de code permettant d'effectuer les étapes du procédé selon l'une quelconque des revendications précédentes, lorsque ledit programme est exécuté sur un ordinateur.

## Patentansprüche

1. Verfahren zum Bestimmen der absoluten geographischen Richtung eines Objekts einer Szene (1) mit einer gewünschten Azimut- und Elevationsleistung der Klasse von 0,1 bis 1 Milliradian, wobei das Verfahren eine Lernphase und eine Online-Betriebsphase beinhaltet,
wobei die Lernphase die folgenden Schritte beinhaltet:
- Erfassen, durch kreisförmiges Abtasten mittels eines Kanals eines ersten optronischen Bildgebungsgeräts im sichtbaren, nahen Infrarot-, kurzen Infrarot-, mittleren Infrarot- oder fernen Infrarotbereich von einer bestimmten festen Position, einer Reihe von teilweise überlappenden optronischen Bildern (2), einschließlich eines Bildes oder mehrerer Bilder der Szene (Schritt A1),
- automatisches Extrahieren, in den Bildern, von Deskriptoren, die durch ihre Bildkoordinaten und ihre radiometrischen Eigenschaften definiert sind, mit mindestens einem Deskriptor unbekannter Richtung in jeder Bildüberlappung (21) (Schritt B1),
- automatisches Schätzen, auf der Basis der in den Überlappungen zwischen Bildern extrahierten Deskriptoren, der relativen Drehung der Bilder untereinander, und Abgleichen der in den Überlappungen extrahierten Deskriptoren (Schritt C1),
- Identifizieren von mindestens einer bekannten geografischen Referenzrichtung (22) mit einer mit der gewünschten Leistung kompatiblen Genauigkeit in den Bildern, und Bestimmen der Bildkoordinaten jeder Referenz (Schritt D1),
- automatisches Schätzen, auf der Basis der in den Überlappungen extrahierten und abgeglichenen Deskriptoren, der Richtung und der Bildkoordinaten jeder Referenz, des Verhaltens jedes Bildes, und Schätzen der Brennweite des ersten Bildgebungsgeräts mit einer mit der gewünschten Leistung kompatiblen Genauigkeit, Feinabstimmungsschritt genannt (Schritt E1),
- Berechnen, auf der Basis des Verhaltens jedes Bildes, der Position und interner Parameter des ersten Bildgebungsgeräts, einschließlich der Brennweite, und der Bildkoordinaten jedes Deskriptors, der absoluten Richtungen der Deskriptoren gemäß einem vorbestimmten Bildgebungsmodell des Bildgebungsgeräts (Schritt F1),
wobei die Online-Betriebsphase die folgenden Schritte beinhaltet:
- Erfassen mindestens eines Bildes des Objekts, aktuelles Bild (20) genannt, von einem zweiten Bildgebungsgerät mit der gleichen festen Position wie das erste Bildgebungsgerät (Schritt A2),
- automatisches Extrahieren von Deskriptoren in jedem aktuellen Bild (Schritt B2),
- automatisches Abgleichen der Deskriptoren jedes aktuellen Bildes mit den Deskriptoren, deren absolute Richtung in der Lernphase berechnet wurde, um die absolute Richtung der Deskriptoren jedes aktuellen Bildes zu bestimmen (Schritt C2),
- automatisches Schätzen, auf der Basis der absoluten Richtungen der Deskriptoren jedes aktuellen Bildes, des Verhaltens jedes aktuellen Bildes (Schritt D2),
- automatisches Berechnen, auf der Basis der Bildkoordinaten des Objekts in jedem aktuellen Bild, des Verhaltens jedes aktuellen Bildes, der Position und interner Parameter des zweiten Bildgebungsgeräts, der absoluten Richtung des Objekts gemäß einem Aufnahmemodell jedes aktuellen Bildes (Schritt E2).

2. Automatisches Verfahren zum Bestimmen der absoluten Richtung eines Objekts nach dem vorhergehenden Anspruch, wobei sich die Brennweite des ersten Bildgebungsgeräts von der Brennweite des zweiten Bildgebungsgeräts unterscheidet.

3. Automatisches Verfahren zum Bestimmen der absoluten Richtung eines Objekts nach einem der vorhergehenden Ansprüche, wobei im Feinabstimmungsschritt eine genaue Position des ersten Bildgebungsgeräts der Lernphase und/oder der internen Parameter des ersten Bildgebungsgeräts der Lernphase geschätzt werden.

4. Automatisches Verfahren zum Bestimmen der absoluten Richtung eines Objekts nach einem der vorhergehenden Ansprüche, wobei die internen Parameter einschließlich der Brennweite des zweiten Bildgebungsgeräts der Online-Phase im Schritt des Schätzens des Verhaltens jedes aktuellen Bildes geschätzt werden.

5. Automatisches Verfahren zum Bestimmen der absoluten Richtung eines Objekts nach einem der vorhergehenden Ansprüche, wobei das erste und das zweite Bildgebungsgerät ein gleiches Bildgebungsgerät sind.

6. Automatisches Verfahren zum Bestimmen der absoluten Richtung eines Objekts nach einem der vorhergehenden Ansprüche, wobei die Deskriptoren der Lernphase mit ihren radiometrischen Eigenschaften und ihren absoluten Richtungen in einer Datenbank archiviert sind.

7. Automatisches Verfahren zum Bestimmen der absoluten Richtung eines Objekts nach einem der vorhergehenden Ansprüche, wobei vor der Online-Betriebsphase eine Dichtekarte der räumlichen Verteilung der Deskriptoren erstellt wird, indem Zellen in Azimut und Elevation bestimmt und positioniert werden und die Anzahl der in diesen Zellen gefundenen Deskriptoren angezeigt wird.

8. Automatisches Verfahren zum Bestimmen der absoluten Richtung eines Objekts nach einem der vorhergehenden Ansprüche, wobei die Reihe an in der Lernphase erfassten Bildern einen kompletten Überblick des Horizonts abdeckt.

9. Automatisches Verfahren zum Bestimmen der absoluten Richtung eines Objekts nach einem der Ansprüche 1 bis 6, wobei die in der Lernphase erfasste Reihe von Bildern einen Teil des kompletten Überblicks des Horizonts abdeckt und wobei mindestens zwei Referenzen in den Bildern identifiziert werden.

10. Automatisches Verfahren zum Bestimmen der absoluten Richtung eines Objekts nach einem der vorhergehenden Ansprüche, wobei die Position des ersten Bildgebungsgeräts durch an dem Gerät vorgesehene Positionierungsmittel bestimmt oder aus mehreren Referenzen geschätzt wird.

11. Automatisches Verfahren zum Bestimmen der absoluten Richtung eines Objekts nach einem der vorhergehenden Ansprüche, das einen Schritt des Konstruierens eines Panoramabildes aus den fein abgestimmten Bildern beinhaltet, und wobei jedes Pixel des Panoramabildes mit einer absoluten Richtung assoziiert ist.

12. Automatisches Verfahren zum Bestimmen der absoluten Richtung eines Objekts nach einem der vorhergehenden Ansprüche, wobei die Reihe der erfassten Bilder Videobilder sind.

13. Automatisches Verfahren zum Bestimmen der absoluten Richtung eines Objekts nach einem der vorhergehenden Ansprüche, wobei die Bilderreihe Bild für Bild erfasst wird.

14. Automatisches Verfahren zum Bestimmen der absoluten Richtung eines Objekts nach einem der vorhergehenden Ansprüche, wobei jedes erfasste Bild mit einer Elevation assoziiert ist.

15. Automatisches Verfahren zum Bestimmen der absoluten Richtung eines Objekts nach einem der vorhergehenden Ansprüche, wobei jede Referenz eine terrestrische Bake oder ein Himmelsobjekt ist.

16. Automatisches Verfahren zum Bestimmen der absoluten Richtung eines Objekts nach einem der vorhergehenden Ansprüche, wobei das Objekt in den in der Lernphase erfassten Bildern nicht vorhanden ist.

17. Computerprogrammprodukt, wobei das Computerprogramm Codebefehle zur Durchführung der Schritte des Verfahrens nach einem der vorhergehenden Ansprüche umfasst, wenn das Programm auf einem Computer ausgeführt wird.

## Claims

1. A method of determining the absolute geographic direction of an object of a scene (1), with a predetermined desired performance in azimuth and an elevation of the class from 0.1 to 1 milli-radian, the method comprising a learning phase and an online operation phase,
the learning phase comprising the following steps:
- acquisition by circular scanning by means of a channel of a first optronic imaging device in the visible, the Near-Infrared, the Short-Infrared, the Mid-Infrared or the Far-Infrared region, of determined fixed position, of a series of partially overlapping optronic images (2), including an image or several images of the scene (step A1),
- automatic extraction in the images, of descriptors defined by their image coordinates and their radiometric characteristics, with at least one descriptor of unknown direction in each overlap (21) of images (step B1),
- from the descriptors extracted in the overlaps between images, automatic estimation of the mutual relative rotation of the images and mapping of the descriptors extracted in the overlaps (step C1),
- identification in the images, of at least one known reference geographic direction (22) of precision compatible with the desired performance, and determination of the image coordinates of each reference (step D1),
- from the descriptors extracted in the overlaps and mapped, the direction and image coordinates of each reference, automatic estimation of the attitude of each image and estimation of the focal length of the first imaging device with a precision compatible with the desired performance, called fine registration step (step E1),
- from the attitude of each image, the position and internal parameters of the first imaging device including the focal length, and the image coordinates of each descriptor, computation of the absolute directions of the descriptors according to a predetermined model of shooting of the imaging device (step F1),
the online operation phase comprising the following steps :
- acquisition of at least one image of the object called current image (20), from a second imaging device of the same determined fixed position as the first imaging device (step A2),
- automatic extraction of descriptors in each current image (step B2),
- automatic mapping of the descriptors of each current image with the descriptors whose absolute direction was calculated in the learning phase, to determine the absolute direction of the descriptors of each current image (step C2),
- from the absolute directions of the descriptors of each current image, automatic estimation of the attitude of each current image (step D2),
- from the image coordinates of the object in each current image, the attitude of each current image, the position and internal parameters of the second imaging device, automatic computation of the absolute direction of the object according to a model of shooting of each current image (step E2).

2. Automatic method of determining the absolute direction of an object according to the preceding claim, wherein the focal length of the first imaging device is different from the focal length of the second imaging device.

3. Automatic method of determining the absolute direction of an object according to one of the preceding claims, wherein a precise position of the first imaging device of the learning phase and/or the internal parameters of the first imaging device of the learning phase are estimated in the fine registration step.

4. Automatic method of determining the absolute direction of an object according to one of the preceding claims, wherein the internal parameters including the focal length of the second imaging device of the online phase are estimated in the step of estimating the attitude of each current image.

5. Automatic method of determining the absolute direction of an object according to one of the preceding claims, wherein the first and second imaging devices are one and the same imaging device.

6. Automatic method of determining the absolute direction of an object according to one of the preceding claims, wherein the descriptors of the learning phase are archived in a database with their radiometric characteristics and their absolute directions.

7. Automatic method of determining the absolute direction of an object according to one of the preceding claims, wherein a map of density of the spatial distribution of the descriptors is constructed before the online operation phase by determining and positioning cells in azimuth and elevation and by indicating the number of descriptors found in these cells.

8. Automatic method of determining the absolute direction of an object according to one of the preceding claims, wherein the series of images acquired in the learning phase covers a complete horizon overview.

9. Automatic method of determining the absolute direction of an object according to one of claims 1 to 6, wherein the series of images acquired in the learning phase covers a portion of the complete horizon overview and wherein at least two references are identified in the images.

10. Automatic method of determining the absolute direction of an object according to one of the preceding claims, wherein the position of the first imaging device is determined by positioning means with which said device is equipped or is estimated from several references.

11. Automatic method of determining the absolute direction of an object according to one of the preceding claims, comprising a step of construction of a panoramic image from finely registered images, and wherein each pixel of the panoramic image is associated with an absolute direction.

12. Automatic method of determining the absolute direction of an object according to one of the preceding claims, wherein the series of images acquired are video images.

13. Automatic method of determining the absolute direction of an object according to one of the preceding claims, wherein the series of images is acquired image by image.

14. Automatic method of determining the absolute direction of an object according to one of the preceding claims, wherein each image acquired is associated with an elevation.

15. Automatic method of determining the absolute direction of an object according to one of the preceding claims, wherein each reference is a terrestrial landmark or a celestial object.

16. Automatic method of determining the absolute direction of an object according to one of the preceding claims, wherein the object is absent from the images acquired during the learning phase.

17. A computer program product, said computer program comprising code instructions for performing the steps of the method according to any one of the preceding claims, when said program is run on a computer.
